# EUROPEAN PATENT SPECIFICATION

(11) **EP 0 557 898 B1**
(45) Date of publication and mention of the grant of the patent: **29.01.1997**
(21) Application number: 93102622.3
(22) Date of filing: 19.02.1993
(51) Int. Cl.: H01R 23/70

(54) **Improved edge card connector**
Steckverbinder für die Kante einer gedruckten Schaltung
Connecteur pour la bordure d'un circuit imprimé

(30) Priority: 24.02.1992 US 840421
(43) Date of publication of application: 01.09.1993
(73) Proprietor: MOLEX INCORPORATED, Lisle Illinois 60532-1682 (US)
(72) Inventor: Yamada, Shoji, Machida shi, Tokyo 194 (JP); Yamamoto, Yoshihisa, Utsukushigaoka, Midoriku 227 (JP)
(74) Representative: Blumbach, Kramer & Partner

(56) References cited:
- EP-A- 0 276 924
- EP-A- 0 400 378
- EP-A- 0 422 807
- EP-A- 0 443 493
- DE-A- 2 130 729
- DE-U- 9 201 757
- FR-A- 2 386 961
- US-A- 5 002 498

## Description

The present invention relates generally to an electrical connector according to the preamble of claim 1. A connector of that type is disclosed in EP-A-0 443 493.

Many electrical circuits, especially those used in the computer arts, are presently formed on one or more surfaces or levels of circuit boards, or similar substrates, to form separate circuits which may be added to computers or other electronic devices after initial manufacture thereof to improve the performance thereof. Whether such circuits are added during the initial manufacture or afterwards, these separate circuit boards must be reliably connected to the main computer printed circuit board, commonly referred to in the art as a "mother" board. The separate printed circuit boards are commonly referred to as "daughter" boards.

Connectors have been developed in the computer art which are designed for permanent installation on the mother board. These connectors contain a means for receiving the daughter board, such as a slot, to provide a connection between the mother board circuitry and the daughter board additional circuitry. These daughter boards are also descriptively referred to as "edge cards" because one side, or edge, of the card contains a plurality of relatively wide contact portions known as contact pads. The edge of the circuit card typically contains a plurality of these contact pads disposed thereon which extend laterally along one edge. One or both of sides of the edge card may contain such contact pads. This edge containing the contact pads is inserted into a slot of the connector which typically includes a number of electrical contact portions which may be similarly disposed along one or more sides of the connector slot in a manner to oppose the edge card contact pads. The connector contacts may typically include a tail portion, which projects from the connector for interconnection to the circuitry of the mother board positioned beneath or adjacent the connector. These ends are connected to the mother board by suitable means such as soldering to form an electrically conductive connection between the mother board and the edge card connector. Each connector contact further includes an edge card contact portion which is arranged within the card slot in a manner to abuttingly contact the edge card contact pads to provide an electrical connection between the edge card and the mother board.

Edge card connectors are well known in the art. One type of edge card connector is known as a low or zero-insertion force connector which is particularly suitable for receiving a single in-line computer memory module, commonly referred to as a "SIMM" module, to increase the memory capability of a computer. Such connectors are described in US-A-3,848,952, issued November 19, 1974 and US-A-4,575,172 issued March 11, 1986. In many of these low or zero insertion force edge card connectors, the connector contact terminals include two spaced-apart contact prongs, or arms, having opposing, spaced apart contact end portions. The edge card is inserted into the opening between the contact arms, contact pad edge first, and rotated for a predetermined angle until the edge card engages one or more mechanical latches. The spacing between the opposing contact arms is such that the contact pads of the edge card do not contact the contact arms of the connector with any appreciable normal force during insertion of the edge card.

Although reliable, this type of zero or low-insertion force edge card connector suffers from certain inherent disadvantages. Because such connectors require the edge card to be rotated, the spacing between adjacent connectors and other circuit board components must be sufficient to provide clearance for the insertion and rotation of the edge card. In instances where the rotatable edge cards are positioned adjacent each other, it may become necessary to remove one or more edge cards to remove a particular edge card. Finally, rotatable edge cards tend to warp because the contacts located adjacent the bottom edge of the card inherently exert a force tending to rotate the edge card back to its original position and latch mechanisms located at opposing ends of the card hold the card in an operative position. Over time and through cycles of insertion and removal, these forces tend to cause the card to warp which then causes a strain to be placed upon device I.C. leads which may cause failure thereof.

The other type of edge card connector known is commonly referred to as a "push-pull" edge card connector in which the edge card is inserted into the connector by pushing the edge card contact edge into the connector slot in a vertical direction. Removal of the edge card is attained by pulling it out of the slot or through the use of some type of urging mechanism. Such a "push-pull" type connector is described in US-A-4,973,270 (= EP-A-0 400 378) which issued November 27, 1990. In such connectors, a plurality of contacts, or terminals, extend within the connector slot to provide the required contact surfaces for engagement when the edge card is inserted. However, certain parameters must be met in the construction of such connectors. For example, due to the translational insertion and removal nature of these connectors, it is desirable to keep the insertion forces low for ease of insertion and to minimize the wear on the edge card contact pads and the connector terminals. EP-A-0 443 493 from which claim 1 starts discloses such stamped contact terminals whereby each contact terminal has a lead extending offset to different sides in an alternating manner for providing an interconnection between the contact terminal and a circuit board and each contact terminal has further a pair of spring or contact arms which are outwardly deflectable.

Accordingly, a need exists for an edge card connector having stamped and formed resilient metal contact terminals disposed within a connector housing whereby a portion of the terminals are deflectable within the housing upon insertion of a circuit card into the connector. A solution of the corresponding problem is characterized in claim 1.

An edge card connector according to the invention offers significant advantages over the connectors described above, and is reliable and compensates for irregularities which may occur in the manufacture of edge cards. Such an edge card connector has a reduced width which permits closer spacing of secondary printed circuit cards on a primary printed circuit board.

In one principal aspect the present invention accomplishes these advantages by providing an edge card connector of the "push-pull" type having an elongated connector body with a longitudinal edge card receiving slot extending therein. The connector body has a plurality of contact-receiving cavities which intersect with and open into the connector body edge card slot. Each of the contact-receiving cavities contain an individual spring contact terminal having a generally U-shaped configuration. Each contact terminal has three distinct portions: a tail portion, a positioning portion which positions the spring contact into the card slot a predetermined distance, and a contact portion which includes two opposing contact surfaces, the first contact surface being disposed thereon above the second contact surface. The spring contacts are arranged in the connector body contact-receiving cavities in an alternating manner such that the first contact surfaces of alternating contacts extend into the card slot from different sides of the connector body, and therefore tend to urge the edge card toward the center of the card slot.

In another principal aspect of the present invention, the spring terminal is stamped and formed from a thin metal sheet to provide a general U-shaped contact portion. The solder tail portion is rigidly held within a recess adjoining the contact cavity such that the positioning portion integrally attached thereto has a vertical cantilevered character, and the contact portion thereof extends away from the positioning portion into the card slot. The U-shape of the contact portion not only enhances the spring capability of the contact, but also presents two opposing contact surfaces for the circuit card to contact when inserted into the card slot. The two contact surfaces are maintained at different relative elevations within the card slot such that the first contact surface protrudes into the card slot above the other contact surface. Therefore, when the printed circuit card is inserted into the card slot, one side of the circuit board contacts the first contact surface and deflects it partially into the contact-receiving cavity recess, thereby bringing the second contact surface into contact with an opposite side of the circuit card. In such an arrangement it has been found that the insertion force of the circuit board is minimized, therefore leading to easier insertion of circuit cards into such connectors and to reduce contact wear. The contact surfaces are also coined to enhance the reliability of the contacts with the circuit card.

In still another aspect of the present invention, the first and second contact surfaces of the terminal extend partially into the card slot. The first contact surface is aligned on the contact terminal above the second contact surface within the card slot and therefore the first contact surface deflects partially out of the card slot when the circuit board contacts it. This deflection brings the second contact surface further into the card slot and into engagement with the circuit board. The contact terminals are disposed in the card slot in an alternating fashion to thereby provide a means for centering the circuit board within the card slot.

These and other objects and advantages of the present invention will be clearly understood through a consideration of the following detailed description.

### Brief Description of the Drawings

In the course of this description, reference will be made to the attached drawings in which:
FIGURE 1 is an exploded perspective view of an improved edge card connector constructed in accordance with the principles of the present invention;
FIGURE 2 is an elevational view of the edge card connector of Fig. 1 showing an edge card in phantom partially inserted into the card slot;
FIGURE 3 is a plan view of the edge card connector of Fig. 1;
FIGURE 4 is a cross-sectional view of the connector of Fig. 5, taken along lines 4-4, but with the contact terminals removed from the contact-receiving cavities;
FIGURE 5 is an enlarged plan view of a portion of the connector housing of Fig. 1 showing the contact terminals in place within their cavities;
FIGURE 6 is a perspective view, in section, showing a portion of the connector housing of the connector of Fig. 1, without the contact terminals in place;
FIGURE 7 is a cross-sectional view similar to that of Fig. 4 illustrating a contact terminal in place within a contact-receiving cavity of the connector housing;
FIGURE 8 is the same view as Fig. 7 showing an edge card initially inserted into the card slot;
FIGURE 9 is the same view as Fig. 8 showing the edge card further inserted into the connector housing slot;
FIGURE 10 is an end view of a contact terminal used in the connector of Fig. 1;
FIGURE 11 is a perspective view of the contact terminal of Fig. 10;
FIGURE 12 is a partial sectional side view taken along line 12-12 of Fig. 5 showing the contact terminals in place within the connector housing; and
FIGURE 13 is a perspective view of a portion of the connector of Fig. 1 showing the contact terminal in place within the connector housing.

### Detailed Description of the Invention

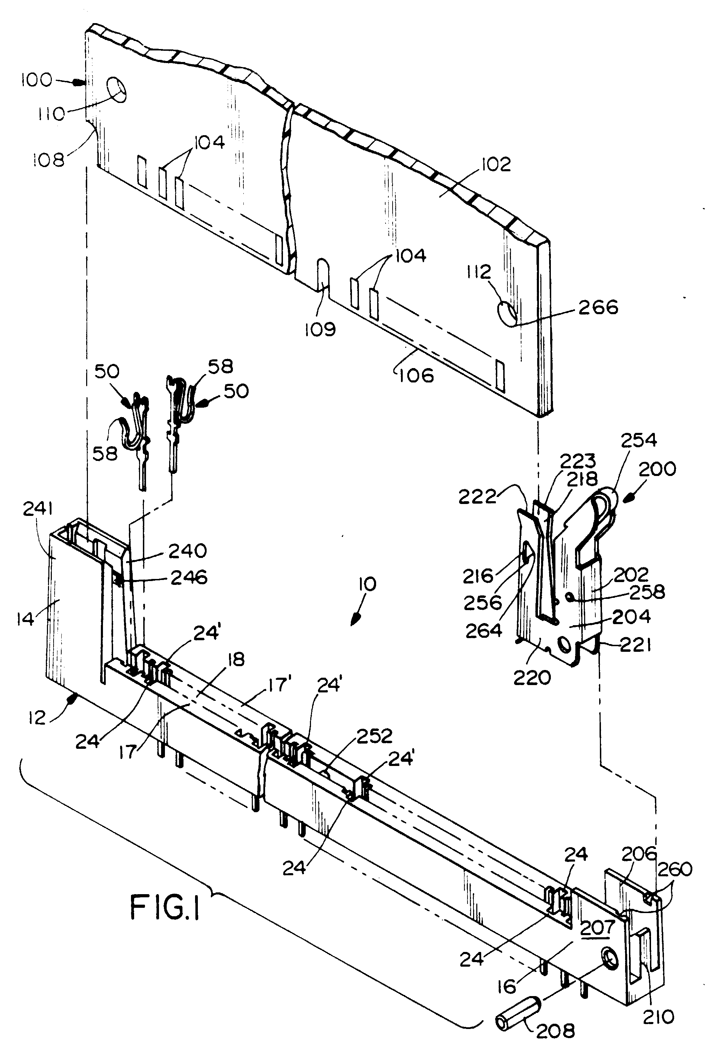

Fig. 1 illustrates an exploded edge card connector, generally indicated at 10, constructed in accordance with the principles of the present invention which includes terminals, indicated generally at 50, and a latching/eject lever, indicated generally at 200, shown with a mating edge card, indicated generally at 100. As shown, the edge card 100 is received within card slot 18 of the connector 10. The edge card 100 may be conventional in nature, having a substrate 102 and a plurality of electrical contact pads 104 aligned along a marginal edge 106 of the edge card 100 and connected to electrical traces (not shown) on or in the card 100. The edge card has contact pads 104 on both sides thereof that are electrically connected to one another to provide redundant contact surfaces which improves the reliability of the edge card/electrical connector interconnection. Edge 106 is designated for insertion into the card slot 18 of the connector 10, as described below. The edge card 100 may further include a means for polarizing the card 100 properly within the connector 10 in the form of a polarizing notch 108 which interacts with projection 250 to prevent a card 100 from being rotated 180° and inserted into the card slot 18. The card 100 may further include one or more openings 110, 112 which are designed to receive, engagement means such as protruding bosses, when the edge card 100 is inserted into place within the card slot 18. The edge card 100 may also include a slot 109 that interacts with a like configured projection 252 in card slot 18 to center the edge card 100 longitudinally so that the contact pads 104 thereof are aligned with their respective contact terminals 50. The edge card 100 may have mounted thereon a plurality of electronic components such as integrated circuits, or memory modules (not shown).

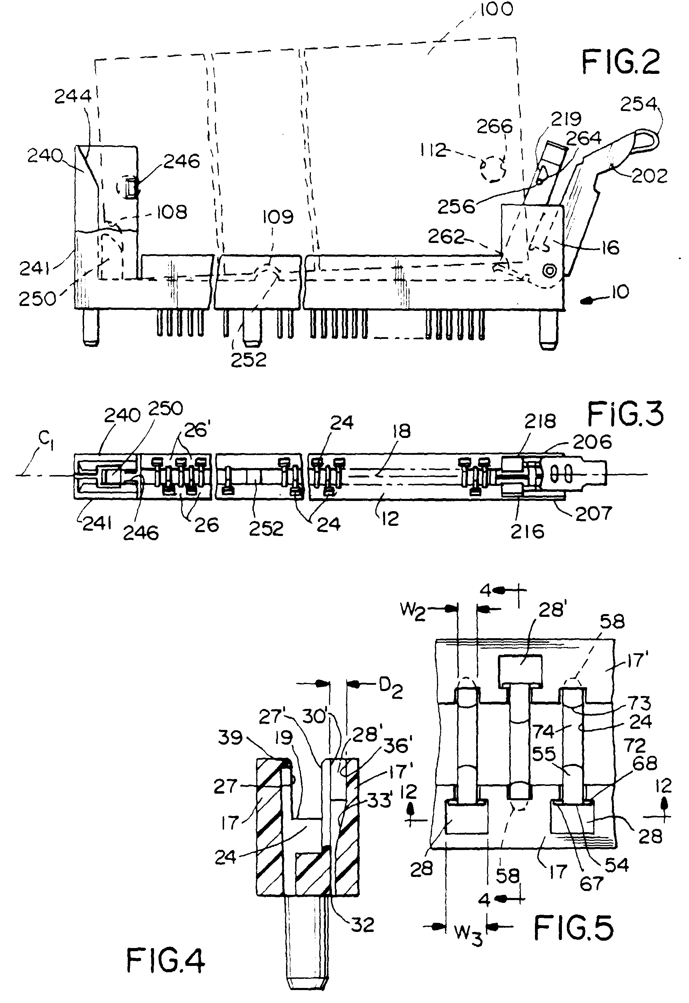

As shown in Fig. 1, the connector 10 includes an elongated connector body, or housing portion, indicated generally at 12, which extends between two opposing end portions 14 and 16. The connector 10 includes an elongated slot, or channel, 18 which extends longitudinally between the opposing end portions 14, 16. The channel 18 is generally defined by two spaced-apart connector housing sidewalls 17, 17' and a connector housing floor 19. (Fig. 3) The sidewalls 17, 17' are generally parallel to each other. The connector housing 12 is formed from an insulative material by a conventional process, such as injection molding. When viewed in cross-section (Fig. 4), the connector housing sidewalls 17, 17' and floor 19 impart a general U-shaped configuration to the connector housing 12.

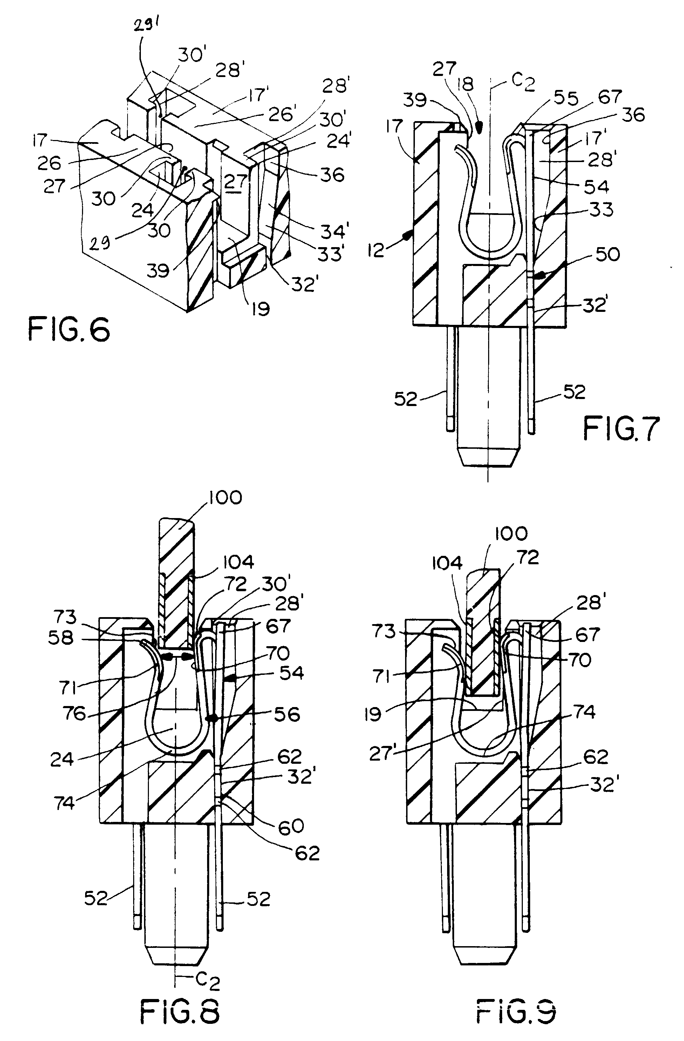

As best seen in Figs. 5-8, the connector housing 12 includes a plurality of contact-receiving cavities 24 associated with the card slot 18. Each cavity includes an enlarged recess 28 or 28' at one end thereof. The cavities 24 are generally oriented transversely to the channel 18 in side-by side order between the connector opposing end portions 14, 16. (Fig. 5) The cavities 24 are arranged in an alternating fashion such that the enlarged recess 28 or 28' of each cavity is on the opposite side of card slot 18 when compared to the enlarged recesses 28', 28 of its adjacent cavities 24. In this regard, throughout this detailed description, a reference numeral having a prime will refer to an element located on one side of the connector housing longitudinal centerline C₁ (Fig. 3) which has a corresponding element located on the opposite side of the centerline. The cavities 24 are separated from each other in a predetermined spacing or pitch by a plurality of partition walls 26, 26' (Figs. 5, 6). The partitions 26, 26' serve to define interior surfaces 27, 27' of the housing sidewalls 17, 17' which in turn, define card slot 18.

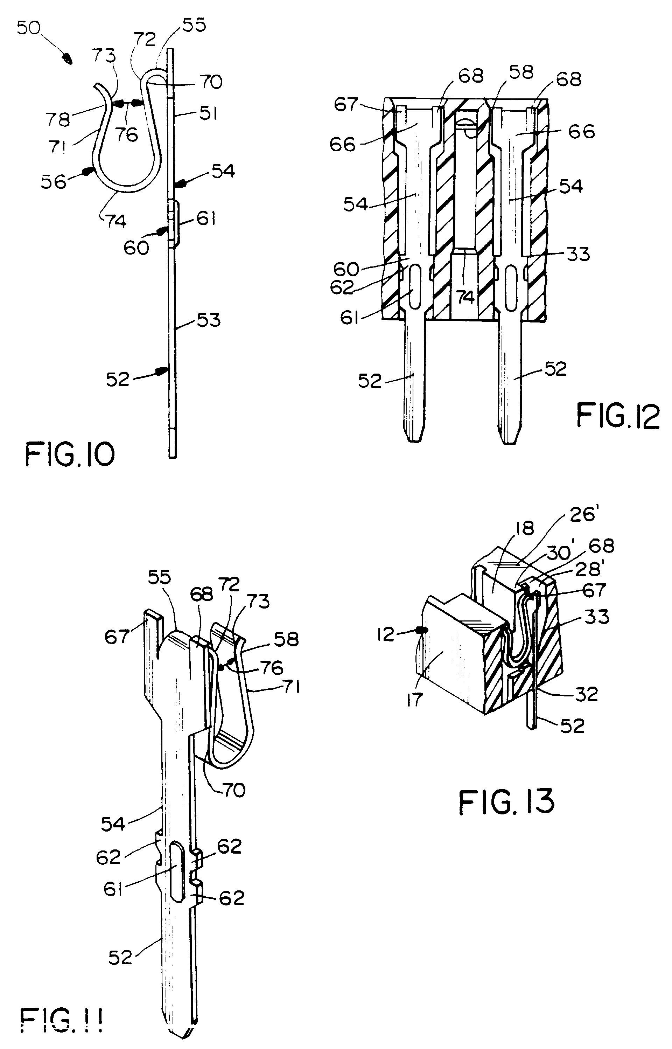

Turning now to Figs. 6 and 7, each cavity 24 extends within the connector sidewalls 17, 17' and the floor 19 to define a space which receives at least a portion of the contact terminal 50. Each cavity 24 also includes an aperture 32 which extends downwardly through the connector housing 12 and floor 19. The aperture 32 receives a base or solder tail portion 52 of the contact terminal 50. The aperture 32 retains the contact terminal 50 in an interference fit within the cavity 24 as further described below with reference to Fig. 12. Each cavity 24 further has a vertically defined enlarged extension or recess portion 28. Each recess 28 has a width W₃ which is greater than the width W₂ of the contact cavity 24. Recess 28 may also have a slightly narrower portion 29 (Fig. 6). This width differential defines a pair of stop walls 30, 30' (Figs. 4, 6) at the interface of each recess 28 and its associated cavity 24 (Fig. 6), the purpose of which is explained in greater detail below.

Turning now specifically to Fig. 4, each recess 28' extends from above the solder tail aperture 32' and extends upwardly through the sidewall 17'. A lower wall 33' of the recess 28' extends upwardly from the aperture 32' at a slight angle and defines an inclined ramp of the recess 28'. The ramped wall 33' extends for a preselected distance and terminates in vertical endwall 36'. The lateral extent D₂ of the recess, which is the distance between the stop wall 30' and the endwall 36' preferably permits movement therein of a portion 54 of the contact terminal 50. Ramp 33' is inclined to guide the solder tail 52 into aperture 32' during loading of the terminals 50 into the housing 12, such loading occurring from the top of housing 12. In addition, ramp 33' may act as a stop surface during the deflection of the terminal 50. The cavities 24, the recesses 28, 28' and the housing sidewalls 17, 17' may include chamfers which serve to guide the terminal tail portion 52 into the housing apertures 32, 32'.

As shown in Figs. 10 and 11, the contact terminal 50 is formed from a single sheet of relatively thin electrically conductive metal, such as beryllium copper or phosphor-bronze. One or more portions of the contact terminal may be plated with an oxidation-resistant material such as gold to improve the conductivity thereof. The terminal solder tail portion 52 extends upwardly and is integrally joined to a generally vertical, cantilevered positioning portion 54 which, in turn, is integrally joined by a generally horizontal transition portion 55 to a contact portion 56. The solder tail portion 52 is adapted to engage the primary circuit board in known manner.

The terminal positioning portion 54 extends upwardly from the solder tail portion 52 at a relatively wide reinforced area 60 which may include one or more outwardly extending barbs 62 which are adapted to engage surfaces 64 of the apertures 32 in an interference fit after insertion of the contact element 50 into the cavity 24. (Fig. 12) The reinforced area 60 preferably includes an embossment 61 disposed therewithin. The embossment 61 serves to increase the section modulus of this area of the terminal 50, thereby increasing the stiffness of this area to increase the resistance thereof to stresses imparted during insertion of the terminal 50 into the cavity 24.

The terminal positioning portion 54 extends generally vertically within the recess 28 when inserted into the contact cavity 24. Because of the lateral extent D₂ of recess 28, the positioning portion 54 is able to deflect within the recess 28 when a circuit card 100 is inserted into the card slot 18. (Figs. 8, 9) The positioning portion 54 has an increased width where the positioning portion 54 and transition portion 55 are joined together which defines two projections 67, 68 from the positioning portion 54. These projections 67, 68 engage the recess shoulder walls 30 to limit the movement of the contact terminal 50 into the card slot 18 during insertion of the circuit card 100 into the card slot 18. The interaction between projections 67, 68 and stop walls 30 limits the extent to which the first, or upper, contact surface 72 protrudes into the channel 18 to substantially reduce the possibility of stubbing the same with the bottom edge 106 of circuit card 100. If desired, projections 67, 68 could be used to preload the terminal 50 up against shoulder walls 30.

The transition portion 55 of the contact terminal 50 extends generally horizontally outwardly from the positioning portion 54 in a cantilevered manner. The transition portion 55 connects the contact portion 56 to positioning portion 54. The contact portion 56 is formed, after stamping, into a general U-shape in which the U-portion thereof has two opposing contact arms 70, 71 disposed on opposite sides thereof with bight 74 therebetween. The contact arms 70, 71 include contact surfaces 72, 73 on their protruding surfaces which are formed by coining.

Coining changes the cross-sectional profile of the contact surfaces from a flat planar surface to a relatively curved surface having a raised central portion. The raised, central portion provides a contact surface having a reduced area as compared to a flat surface. A curved contact surface requires less contact force in order for the contact terminal 50 to exert a desired, predetermined pressure against the contact pads 104 of the card 100. The opening 76 should be dimensioned smaller than the width of an edge card 100 that is to be inserted into the connector to ensure deflection of both arms 70, 71 and thus good contact between contact surfaces 72, 73 and contact pads 104 of the edge card.

The first contact arm 70 extends from the transition portion 55 and curves downwardly and away from the vertical centerline C₂ (Fig. 8) of the card slot 18 along a preselected radius until it reaches a bight 74 which interconnects the first contact arm 70 with the second contact arm 71. The second contact arm 71 extends upwardly from the bight 74 and inwardly toward centerline C₂ until reaching end 58 which then curves outwardly from centerline C₂. The two contact arms 70, 71 define an edge card receiving opening 76 between them. (Fig. 10) This opening 76 increases in width from the contact surfaces 72, 73 down to the bight 74 and assists in imparting the preferred spring characteristics to the contact portion 56 which ensures a reliable electrical connection between the terminal 50 and the edge contact pads 104 of the circuit card 100.

Contact surfaces 72, 73 are at different heights relative to the top of the housing 12 prior to insertion of an edge card to stagger the deflection forces and thus reduce the peak insertion force. As best seen in Fig. 7, a portion of the free end 58 of the terminal 50 extends beneath the ledge portion 39 when the contact terminal 50 is in an unmated, or undeflected, position. This prevents the bottom edge 106 of the card 100 from stubbing the free end 58 of the second contact arm 72 which could damage the terminal 50.

When assembled, the solder tail portion 52 is anchored in the contact cavity aperture 32 by its engagement barbs 62 (Figs. 11, 12). The positioning portion 54 extends vertically within the contact cavity recess 28 (Fig. 7), while contact surfaces 72, 73 extend into the card slot 18. The distance that the first contact arm 70 extends into the card slot 18 is limited by the engagement of the contact element positioning shoulders 67, 68 with the connector housing recess shoulder walls 30.

Figs. 7-9 illustrate best the manner of deflection of the contact terminal 50 from an undeflected position prior to insertion of the card 100 into the card slot 18 (Fig. 7) to an initial deflected position where the card is partially inserted into the card slot 18 (Fig. 8) to a completely deflected position where the card 100 is fully inserted into the card slot 18. (Fig. 9) When an edge card 100 is inserted into the card slot 18 as shown in Fig. 8, the marginal edge 106 having the contact pads 104 slidingly engages the curved contact surface 72 of the first contact arm 70. The contact terminal positioning portion 54 is free to move within the connector housing recess 28' and deflects away from the card slot centerline C₂ within the recess 28', such that it partially pivots relative to the tail portion 52 about the reinforced area 60. This deflection urges U-shaped contact portion 56 to the right as viewed in Fig. 8 to force the second contact arm 71 further into the card slot 18. Further insertion of the edge card 100 into the connector body channel 18 causes the contact arms 71 to deflect outwardly away from centerline C₂ and appropriately contact the edge card 100 at the contact pad portions 104 thereof. By virtue of the spring characteristics of the contact arms 70, 71, the coined contact surfaces 72, 73 react to apply a desired normal force to the edge card 100. Terminal positioning portion 54 also exerts a lateral force on the circuit card 100, which combines with the normal forces of the terminal contact arms 70, 71 to bias the card toward the center of card slot 18. Because of the alternating orientation of the cavities 24 and thus the contact terminals 50 therein, and the biasing nature of the terminals, the connector 10 may accommodate circuit cards which are warped or bowed approximately 0.29 mm from the centerline C₂. Accordingly, a circuit card having warpage within the above described tolerance will tend to flatten out when properly mated with the connector 10.

Because the contact terminal 50 is stamped and formed and because of its configuration within housing 12, the overall width of the housing may be as small as 5.0 mm. This reduced spacing advantageously permits the connector 10 to be used with SIMMs, or other modules, having relatively thin chips thereon, thereby freeing up space for other circuit components on the primary circuit board. Connectors constructed in accordance with the present invention thus permit a reduction in spacing of adjacent connectors on the mother board of from over 7.0 mm to approximately 5.08 mm.

Since the contact arms 70, 71 are formed from the same single piece of sheet metal and contact pads 104 of the edge card that are laterally aligned are electrically connected, a redundant contact system is achieved when an edge card is mated with the connector 10.

Returning to Fig. 1, the connector 10 may also include a latch/eject mechanism 200 pivotally mounted at an end 16 of the connector housing 12. The latch/eject mechanism 200 includes a latch member 202 stamped and formed, as shown, from a metal blank. The latch member 202 is held between two vertical extensions 206, 207 of the connector body 12 by a pivot pin 208 which extends through the connector body extensions 206, 207. A post 210 for centering and supporting the mechanism 200 may be located between the extensions 206, 207. Latch member 202 can be rotated between ejected and latched positions through the application of force to the top or bottom of manually manipulatable portion 254.

The latch member 202 includes two engagement arms 216, 218 extending upwardly in a cantilevered manner from respective base members 220, 221 in a spaced-apart relationship. Each engagement arm 216, 218 is provided with inwardly projecting, generally triangularly shaped bosses 219 which engage similarly positioned opening 112 on the edge card 100. When viewed in end profile, the engagement arms 216, 218 extend slightly inwardly toward each other and then outwardly to define lead-in portions 222, 223 which permit, because of their slope, an edge card 100 to be inserted into the mechanism 200 when the latch/eject mechanism is in either a latched or ejected orientation.

A hole 256 is adjacent the lower edge of boss 219. A pair of outwardly projecting bumps 258 are also provided on leg 204 that interact with recesses 260 contained in housing extensions 206, 207 to retain the latch member in a lateral position. Finally, ejection ledge 262 is positioned between base members 220, 221 to engage the lower surface 106 of edge card 100 when ejecting the card.

When an edge card is positioned in connector 10 and the latch member is in its latched position, bosses 219 extend into hole 112 in the card. Hole 256 creates a generally abrupt edge at the lower portion of boss 219. As a result, the edge interferes with the lower edge of hole 112 if the card is attempted to be removed while the latch member 202 is in its latched position. Upon rotating latch member 202 towards its ejected position, the corner 264 of boss 219 closest to the manipulatable portion 254 begins to contact side edge 266 of hole 112 which causes arms 216, 218 to spread apart thus providing clearance to permit hole 112 to pass by the lower abrupt edge of boss 219 and eject card 100.

At the opposite end 14 of housing 12, two additional extensions 240, 241 extend upwardly in a spaced-apart relationship to define an edge card entry slot 242 therebetween. The extensions 240, 241 preferably each include a downwardly sloped ramp 244 which directs the edge card 100 into proper orientation for insertion into the connector channel 18. Extensions 240, 241 may further include bosses 246 extending therefrom into the entry slot 242 between them that project into openings 110 when the card 100 is inserted into housing 12.

It will be seen that while certain embodiments of the present invention have been shown and described, it will be obvious to those skilled in the art that changes and modifications may be made therein without departing from the scope of the invention, as defined in the appended claims.

## Claims

1. An electrical connector (10) for providing an electrical connection between a plurality of card contacts (104) on a circuit card (102) generally adjacent an edge (106) thereof and a plurality of board contacts on a circuit board, said circuit card (102) being generally planar and having first and second faces, said first and second faces each having a row of card contacts (104) generally parallel to and adjacent said edge (106), one card contact (104) of each row being laterally aligned with and electrically connected to a card contact (104) of the other row to establish a pair of aligned contact pads, said connector (10) including an insulative housing (12) having a lower face for positioning adjacent said circuit board, an upper face having an elongated card slot (18) therein for receiving said edge (106) of said circuit card (102), and a plurality of contact-receiving cavities (24) spaced along the card slot (18) and in communication therewith, said card slot (18) having a longitudinal centerline (C₁), a stamped and formed resiliently deflectable contact terminal (50) positioned in each of said contact-receiving cavities (24), each contact terminal (50) having a tail portion (52) for electrically and mechanically interconnecting said contact terminal (50) to one of the board contacts of said circuit board, said tail portion (52) being offset from the longitudinal centerline (C₁) of said elongated slot (18);
and said contact terminals (50) being positioned in said contact-receiving cavities (24) such that said tail portions (52) of adjacent contact terminals (50) are positioned alternately on opposite sides of said longitudinal centerline (C₁) and each contact terminal (50) further having a generally U-shaped circuit card receiving portion (56) for contacting both contact pads of one of said pairs of contact pads, said generally U-shaped card-receiving portion (56) having first and second resilient arms (70, 71) with contact portions (72, 73) thereon for slidingly engaging said contact pads when said circuit card (102) is inserted into said card slot (18),
characterised in that:
said contact terminals (50) each have a terminal positioning portion (54) which interconnects said tail portion (52) to said circuit card-receiving portion (56), the terminal positioning portion (54) extending from said tail portion (52) in a cantilevered manner and said circuit card receiving portion (56) extending from said terminal positioning portion (54) in a cantilevered manner, the terminal positioning portion (54) further being received by a recess (28) associated with said contact-receiving cavity (24), said terminal positioning portion (54) being movable within said recess (28) upon insertion of said circuit card (102) into said card slot (18)
and in that said contact terminals (50) are stamped and formed such that each contact terminal (50) has a width in a direction parallel to the longitudinal centerline (C₁) of said card slot (18) substantially greater than the thickness of the material from which it is formed.

2. The connector of claim 1, wherein the contact portion (72) of said first resilient arm (70) is disposed closer to said housing upper face than the contact portion (73) of aid second resilient arm (71), whereby the contact portion (72) of said first resilient arm (70) is first engaged by said circuit card (102) and the contact portion (73) of said second resilient arm (71) is next engaged by said circuit card (102) upon insertion of said circuit card into said card slot (18).

3. The connector of claim 1 or 2, wherein each of said contact-receiving cavities (24) includes a stop member (30,30'), the stop member engaging a part (67, 68) of said terminal positioning portion (54) and limiting movement of said first resilient arm (70) into said card slot (18).

4. The connector of claim 2 or 3, wherein said contact terminal (50) includes at least one shoulder portion (67, 68) and said recess (28) of each said contact-receiving cavity (24) having a stop surface (30, 30') which engages said shoulder portion (67, 68) to limit movement of said terminal positioning portion (54) therein upon insertion of said circuit card (102) into said card slot (18).

5. The connector of claim 4, wherein the dimension of said recess (28) in a direction parallel to said longitudinal centerline (C₁) is greater than the dimension of a portion of said contact-receiving cavity (24) positioned between said recess (28) and said elongated slot (18) in a direction parallel to said longitudinal centerline (C₁).

6. The connector of one of claims 1 to 5, wherein said tail portion (52) is offset from said circuit card receiving portion (56) and adjacent contact terminals (50) are oppositely oriented such that said tail portions (52) of adjacent contact terminals (50) are positioned on opposite sides of the longitudinal centerline (C₁) of said card slot (18) to define a staggered pattern.

7. The connector of one of claims 1 to 6, further including a vertical recess (28) at least partially communicating with said contact receiving cavity (24), the terminal positioning portion (54) being disposed in the recess and deflecting therein upon insertion of said circuit card (102) into said card slot (18).

## Patentansprüche

1. Elektrischer Verbinder (10) zur Herstellung einer elektrischen Verbindung zwischen einer Vielzahl von Kartenkontakten (104) auf einer Schaltungskarte (102) in der Nähe einer Kartenkante (106) und einer Vielzahl von Platinenkontakten auf einer Schaltungsplatine, wobei die Schaltungskarte (102) im wesentlichen eben ist, und eine erste sowie eine zweite Fläche besitzt, die je eine Zeile von Kartenkontakten (104) generell parallel zu und nahe der Kante (106) besitzen, ein Kartenkontakt (104) jeder Zeile seitlich ausgerichtet ist zu und elektrisch verbunden mit einem Kartenkontakt (104) der anderen Zeile, um ein Paar von zueinander ausgerichteten Kontaktflecken zu bilden, wobei ferner der Verbinder (10) ein isolierendes Gehäuse (12) mit einer unteren Fläche zur Anordnung nahe der Schaltungsplatine, eine obere Fläche mit einem länglichen Kartenschlitz (18) zur Aufnahme der Kante (106) der Schaltungskarte (102) und eine Vielzahl von Kontaktaufnahmekammern (24) besitzt, die entlang des Kartenschlitzes (18) und in Verbindung mit diesem im Abstand voneinander angeordnet sind, der Kartenschlitz (18) eine in Längsrichtung verlaufende Mittellinie (C₁) und einen gestanzten und geformten, elastisch abbiegbaren Kontaktanschluß (50) in jeder Kontaktaufnahmekammer (24) besitzt, jeder Kontaktanschluß (50) einen Schwanzabschnitt (52) zur elektrischen und mechanischen Verbindung des Kontaktanschlusses (50) mit einem der Platinenkontakte der Schaltungsplatine aufweist, der Schwanzabschnitt (52) gegen die in Längsrichtung verlaufende Mittellinie (C₁) des länglichen Schlitzes (18) versetzt ist, und die Kontaktanschlüsse (50) in den Kontaktaufnahmekammern (24) so angeordnet sind, daß die Schwanzabschnitte (52) benachbarter Kontaktanschlüsse (50) abwechselnd auf entgegengesetzten Seiten der Mittellinie (C₁) angeordnet sind und jeder Kontaktanschluß (50) ferner einen im wesentlichen U-förmigen Schaltungskarten-Aufnahmeabschnitt (56) zur Kontaktierung beider Kontaktflecken eines der Paare von Kontaktflecken besitzt, und wobei der im wesentlichen U-förmige Kartenaufnahmeabschnitt (56) einen ersten und einen zweiten elastischen Arm (70, 71) mit Kontaktabschnitten (72, 73) aufweist, die die Kontaktflächen gleitend berühren, wenn die Schaltungskarte (102) in den Kartenschlitz (18) eingesetzt wird,
dadurch gekennzeichnet,
daß die Kontaktanschlüsse (50) je einen Anschlußpositionierungsabschnitt (54) besitzen, der eine Verbindung zu dem Schwanzabschnitt (52) des Schaltungskarten-Aufnahmeabschnitts (56) herstellt, daß der Anschlußpositionierungsabschnitt (54) sich freitragend von dem Schwanzabschnitt (52) aus und der Schaltungskarten-Aufnahmeabschnitt (56) sich freitragend von dem Anschlußpositionierungsabschnitt (54) aus erstrecken, daß der Anschlußpositionierungsabschnitt (54) ferner von einer der Kontaktaufnahmekammer (24) zugeordneten Ausnehmung (28) aufgenommen ist, daß der Anschlußpositionierungsabschnitt bei Einsetzen der Schaltungskarte (102) in den Kartenschlitz (18) in der Ausnehmung (28) bewegbar ist, und daß die Kontaktanschlüsse (50) so ausgestanzt und geformt sind, daß jeder Kontaktanschluß (50) eine Breite in Richtung parallel zur in Längsrichtung verlaufenden Mittellinie (C₁) des Kartenschlitzes (18) besitzt, die wesentlich größer als die Dicke des Materials ist, aus dem der Kontaktanschluß gebildet ist.

2. Verbinder nach Anspruch 1, bei dem der Kontaktabschnitt (72) des ersten elastischen Arms (70) dichter an der oberen Gehäusefläche als der Kontaktabschnitt (73) des zweiten elastischen Arms (71) angeordnet ist, wodurch der Kontaktabschnitt (72) des ersten elastischen Arms (70) als erstes von der Schaltungskarte (102) und der Kontaktabschnitt (73) des zweiten elastischen Arms (71) als nächstes von der Schaltungskarte (102) bei Einsetzen der Karte in den Kartenschlitz (18) berührt wird.

3. Verbinder nach Anspruch 1 oder 2, bei dem jede Kontaktaufnahmekammer (24) ein Stoppglied (30, 30') enthält, das einen Teil (67, 68) des Anschlußpositionierungsabschnitts (54) berührt und die Bewegung des ersten elastischen Arms (70) in den Kartenschlitz (18) begrenzt.

4. Verbinder nach Anspruch 2 oder 3, bei dem der Kontaktanschluß (50) wenigstens einen Schulterabschnitt (67, 68) und die Ausnehmung (28) jeder Kontaktaufnahmekammer (24) eine Stoppfläche (30, 30') besitzen, die den Schulterabschnitt (67, 68) zur Begrenzung der Bewegung des Anschlußpositionierungsabschnitts (54) bei Einsetzen der Schaltungskarte (102) in den Kartenschlitz (18) begrenzt.

5. Verbinder nach Anspruch 4, bei dem die Abmessung der Ausnehmung (28) in Richtung parallel zu der in Längsrichtung verlaufenden Mittellinie (C₁) größer ist als die Abmessung eines Abschnitts der Kontaktaufnahmekammer zwischen der Ausnehmung (28) und dem Schlitz (18) in Richtung parallel zu der in Längsrichtung verlaufenden Mittellinie (C₁) ist.

6. Verbinder nach einem der Ansprüche 1 bis 5, bei dem der Schwanzabschnitt (52) gegen den Schaltungskarten-Aufnahmeabschnitt (56) versetzt ist und benachbarte Kontaktanschlüsse (50) sich gegenüberliegend so orientiert sind, daß die Schwanzabschnitte (52) benachbarter Kontaktanschlüsse (50) auf entgegengesetzten Seiten der in Längsrichtung verlaufenden Mittellinie (C₁) des Kartenschlitzes (18) angeordnet sind, um ein versetztes Muster zu bilden.

7. Verbinder nach einem der Ansprüche 1 bis 6 mit ferner einer vertikalen Ausnehmung (28), die wenigstens teilweise mit der Kontaktaufnahmekammer (24) in Verbindung steht, wobei der Anschlußpositionierungsabschnitt (24) in der Ausnehmung angeordnet und dort bei Einsetzen der Schaltungskarte (102) in den Kartenschlitz (18) abgebogen wird.

## Revendications

1. Connecteur électrique (10) pour fournir une connexion électrique entre une pluralité de contacts de carte (104), qui se trouvent sur une carte de circuits imprimés (102) et sont généralement adjacents à un bord (106) de cette dernière, et une pluralité de contacts de plaquette, qui se trouvent sur une plaquette de circuits imprimés, ladite carte de circuits imprimés (102) étant généralement plane et ayant une première face et une seconde face. lesdites première et seconde faces ayant chacune une rangée de contacts de carte (104) qui sont généralement parallèles, et adjacents, au dit bord (106), un contact de carte (104) d'une rangée étant aligné latéralement, et connecté électriquement, avec un contact de carte (104) de l'autre rangée de manière à former une paire de pastilles de contact alignées, ledit connecteur (10) comprenant un boîtier isolant (12) ayant une face inférieure pour positionnement adjacent à ladite plaquette de circuits imprimés, une face supérieure à partir de laquelle sont ménagées une fente à carte allongée (18), pour recevoir ledit bord (106) de ladite carte de circuits imprimés (102), ainsi qu'une pluralité de cavités de réception de contacts (24) qui sont disposées avec un certain espacement le long de la fente à carte (18) et qui sont en communication avec cette dernière, ladite fente à carte (18) ayant une ligne médiane longitudinale (C₁), une borne de contact (50), estampée et mise en forme de manière à pouvoir se courber élastiquement, placée dans chacune des dites cavités (24) de réception de contacts, chaque borne de contact (50) ayant une partie formant queue (52) pour interconnecter électriquement et mécaniquement ladite borne de contact (50) à l'un des contacts de plaquette de ladite plaquette de circuits imprimés, ladite partie formant queue (52) étant décalée par rapport à la ligne médiane longitudinale (C₁) de ladite fente allongée (18);
et lesdites bornes de contact (50) étant positionnées dans lesdites cavités de réception de contacts (24) de telle manière que iesdites parties formant queues (52) des bornes de contact (50) adjacentes sont positionnées, en alternance, de part et d'autre de ladite ligne médiane longitudinale (C₁) et chaque borne de contact (50) ayant en outre une partie (56) de réception de carte de circuits imprimés, généralement en forme de U, pour établir un contact avec les deux pastilles de l'une des dites paires de pastilles de contact, ladite partie (56) de réception de carte généralement en forme de U ayant un premier et un second bras élastiques (70, 71) avec des parties de contact (72, 73) ménagées sur ces derniers pour se mettre en prise avec lesdites pastilles de contact, avec glissement, lorsque ladite carte de circuits imprimés (102) est insérée dans ladite fente à carte (18),
caractérisé en ce que:
lesdites bornes de contact (50) ont chacune une partie de positionnement de borne (54) qui interconnecte ladite partie formant queue (52) à ladite partie de réception de carte de circuits imprimés (56), la partie de positionnement de borne (54) s'étendant en porte à faux à partir de ladite partie formant queue (52) et la partie de réception de carte de circuits imprimés (56) s'étendant en porte à faux à partie de ladite partie de positionnement de borne (54), la partie de positionnement de borne (54) étant en outre reçue dans un évidement (28) qui est associé à ladite cavité de réception de contact (24), ladite partie de positionnement de borne (54) pouvant se déplacer à l'intérieur dudit évidement (28) lors de l'insertion de ladite carte de circuits imprimés (102) dans ladite fente à carte (18)
et en ce que lesdites bornes de contact (50) sont estampées et mises en forme de telle manière que chaque borne de contact (50) a une largeur, dans une direction parallèle à celle de la ligne médiane longitudinale (C₁) de ladite fente à carte (18), qui est substantiellement supérieure à l'épaisseur du matériau à partir duquel elle est formée.

2. Connecteur selon la revendication 1, caractérisé en ce que la partie de contact (72) du dit premier bras élastique (70) est disposée plus proche de la face supérieure dudit boîtier que la partie de contact (73) du dit second bras élastique (71), par quel moyen la partie de contact (72) du dit premier bras élastique (70) est la première mise en prise avec ladite carte de circuits imprimés (102), après quoi la partie de contact (73) du dit second bras élastique (71) est mise en prise avec ladite carte de circuits imprimés (102), lorsque ladite carte de circuits imprimés est insérée dans ladite fente à carte (18).

3. Connecteur selon la revendication 1 ou 2, caractérisé en ce que chacune des dites cavités (24) de réception de contacts comprend un organe de butée (30, 30'), l'organe de butée portant contre une portion (67, 68) de ladite partie de positionnement de borne (54) et limitant le mouvement dudit premier bras élastique (70) dans ladite fente à carte (18).

4. Connecteur selon la revendication 2 ou 3, caractérisé en ce que ladite borne de contact (50) comprend au moins une partie à épaulement (67 ,68) et ledit évidement (28) de chacun des dites cavités de réception de contacts (24) a une surface de butée (30, 30') qui porte sur ladite partie à épaulement (67, 68) afin de limiter le mouvement de ladite partie de positionnement de borne (54) en cet endroit lorsque ladite carte de circuits imprimés (102) est insérée dans ladite fente à carte (18).

5. Connecteur selon la revendication 4, caractérisé en ce que la dimension du dit évidement (28) dans une direction parallèle à ladite ligne médiane longitudinale (C₁) est supérieure à la dimension d'une portion de ladite cavité de réception de contact (24) se trouvant entre ledit évidement (28) et ladite fente allongée (18) dans une direction parallèle à ladite ligne médiane longitudinale (C₁).

6. Connecteur seion l'une queiconque des revendications 1 à 5, caractérisé en ce que ladite partie formant queue (52) est décalée par rapport à ladite partie de réception de carte de circuits imprimés (56) et les bornes de contact adjacentes (50) sont orientées de manières opposées de telle manière que lesdites parties formant queues (52) des bornes de contact (50) adjacentes sont positionnées de part et d'autre de la ligne médiane longitudinale (C₁) de ladite fente à carte (18) de manière à définir une structure alternée ou en quinconce.

7. Connecteur selon l'une quelconque des revendications 1 à 6, comprenant en outre un évidement vertical (28) communiquant, au moins partiellement, avec ladite cavité de réception de contact (24), la partie de positionnement de borne (54) étant disposée dans l'évidement et y fléchissant lorsque la carte de circuits imprimés (102) est insérée dans ladite fente à carte (18).
